# EUROPEAN PATENT APPLICATION

(11) **EP 4 657 058 A1**
(43) Date of publication of application: **03.12.2025**
(21) Application number: 25180135.3
(22) Date of filing: 02.06.2025
(51) Int. Cl.: G01N 29/04, G01N 29/44, G01N 29/46

(54) **METHOD FOR INSPECTING A POWERPLANT COMPONENT**

(30) Priority: 31.05.2024 US 202418680577
(71) Applicant: RTX Corporation, Farmington, CT 06032 (US)
(72) Inventor: CHEN, Yan, South Windsor, 06074 (US); TAPP, Lauren, Hartford, 06106 (US)
(74) Representative: Dehns

(57) **Abstract**

A method of inspecting a component (34) for the presence or absence of a defect is provided that includes: using a transducer (40) to interrogate a metallic component (34) by transmitting first signals into the component (34) and sensing the component (34) for second signals resulting from the transmitted first signals, and producing component response signals within a frequency band representative of the second signals; selecting a signal peak of interest within from the component response signals, the signal peak of interest within a sub band of the frequency band; processing the component response signals within the sub band, the processing including converting the component response signals into complex numbers and producing a complex plane representation using the complex numbers; and using the complex plane representation, identify the signal peak of interest as associated with a physical characteristic of the component (34) or associated with signal noise.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, a method of inspecting a component for the presence or absence of a defect is provided. The method includes: using a transducer to interrogate a component comprising a solid metallic material by transmitting first signals into the component and sensing the component for second signals resulting from the first signals being transmitted into the component, and producing component response signals within a frequency band representative of the second signals; selecting a signal peak of interest within from the component response signals, the signal peak of interest within a sub band of the frequency band; processing the component response signals within the sub band, the processing including converting the component response signals within the sub band into complex numbers and producing a complex plane representation using the complex numbers; and using the complex plane representation, identify the signal peak of interest as associated with a physical characteristic of the component or associated with signal noise.

In any of the aspects or examples described above and herein, the step of identifying the signal peak of interest as associated with the physical characteristic of the component or associated with signal noise may include evaluating the complex plane representation.

In any of the aspects or examples described above and herein, the evaluating the complex plane representation may include determining whether the complex plane representation is a looped configuration.

In any of the aspects or examples described above and herein, the evaluating step may include determining a degree of circularity associated with a respective looped configuration.

In any of the aspects or examples described above and herein, the step of identifying the signal peak of interest as associated with a respective physical characteristic of the component or associated with signal noise may be based on the degree of circularity of the respective looped configuration.

In any of the aspects or examples described above and herein, the step of identifying the signal peak of interest as associated with a respective physical characteristic of the component or associated with signal noise may utilize a degree of circularity threshold value.

In any of the aspects or examples described above and herein, the threshold value may be based on a degree of fit between the respective looped representation and a modeled representation.

In any of the aspects or examples described above and herein, the threshold value may be based on empirical data.

In any of the aspects or examples described above and herein, the method may include determining a defect degree of severity value based on the degree of circularity associated with the respective looped configuration.

In any of the aspects or examples described above and herein, the defect degree of severity value may also be based on empirical data.

According to an aspect of the present disclosure, which the Applicant expressly reserves the right to claim independently, a method of inspecting a component for the presence or absence of a defect is provided. The method includes: using a transducer to interrogate a component comprising a solid metallic material by transmitting first signals into the component and sensing the component for second signals resulting from the first signals being transmitted into the component, and producing component response signals within a frequency band representative of the second signals; and screening a plurality of signal peaks within the component response signals within a frequency band. The screening includes: selecting a respective signal peak of the plurality of signal peaks, the respective signal peak within a sub band of the frequency band; processing the component response signals within the sub band, the processing including converting the component response signals within the sub band into complex numbers and producing a complex plane representation using the complex numbers; determining whether or not the complex plane representation is a looped configuration and determining a degree of circularity of the complex plane representation if the complex plane representation is a looped configuration; and identifying the signal peak as associated with a physical characteristic of the component or associated with signal noise using the degree of circularity.

According to an aspect of the present disclosure, an inspection system for a component within a gas turbine engine is provided. The component comprises a solid metallic material. The system includes a transducer and a controller. The transducer has a signal transmitter and a signal receiver. The controller is in communication with the signal transmitter, the signal receiver, and a non-transitory memory storing instructions. The instructions when executed cause the controller to: control the signal transmitter to transmit a first signal into the component comprising the solid metallic material; control the signal receiver to sense the component for a second signal resulting from the first signal being transmitted into the component, and to produce response signals within a frequency band representative of the second signals; select a signal peak of interest within from the response signals, the signal peak of interest within a sub band of the frequency band; process the response signals within the sub band, the processing including converting the response signals within the sub band into complex numbers and producing a complex plane representation using the complex numbers; and using the complex plane representation, identify the signal peak of interest as associated with a physical characteristic of the component or associated with signal noise.

In any of the aspects or examples described above and herein, the instructions when executed may cause the controller to determine whether the complex plane representation is a looped configuration, and determine a degree of circularity of the complex plane representation if the complex plane representation is a looped configuration.

In any of the aspects or examples described above and herein, the step of identifying the signal peak of interest as associated with a respective physical characteristic of the component or associated with signal noise may be based on the degree of circularity of the respective looped configuration.

In any of the aspects or examples described above and herein, the step of identifying the signal peak of interest as associated with a respective physical characteristic of the component or associated with signal noise may utilize a degree of circularity threshold value.

In any of the aspects or examples described above and herein, the instructions when executed may cause the controller to determine a defect degree of severity value based on the degree of circularity associated with the respective looped configuration.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an airplane having a powerplant with which the present disclosure may be used.
FIG. 2 is a diagrammatic illustration of a gas turbine engine with which the present disclosure may be used.
FIG. 3 is a diagrammatic view of an embodiment of a present disclosure inspection scope engaged with a component.
FIG. 4 is a graph of signal magnitude versus frequency diagrammatically illustrating a band of transducer response signals, including a plurality of signal peaks.
FIG. 5 is a graph of the transducer response signals shown in FIG. 4, illustrating a selected signal peak and sub band width for evaluation.
FIG. 6 is a diagrammatic illustration of an Argand diagram that represents a complex plane.
FIG. 7 is a diagrammatic illustration of transducer response signals within a narrow frequency band around a selected signal peak (F1) converted into complex numbers and represented in a complex plane.

### DETAILED DESCRIPTION

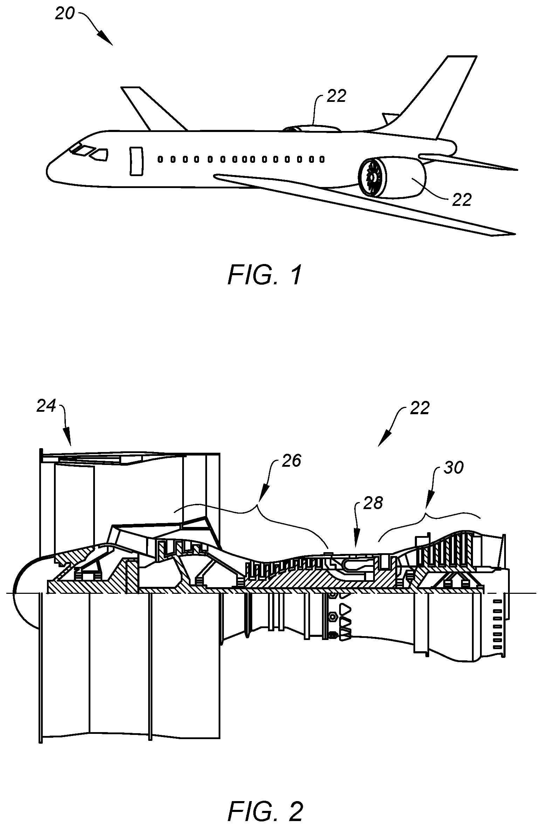

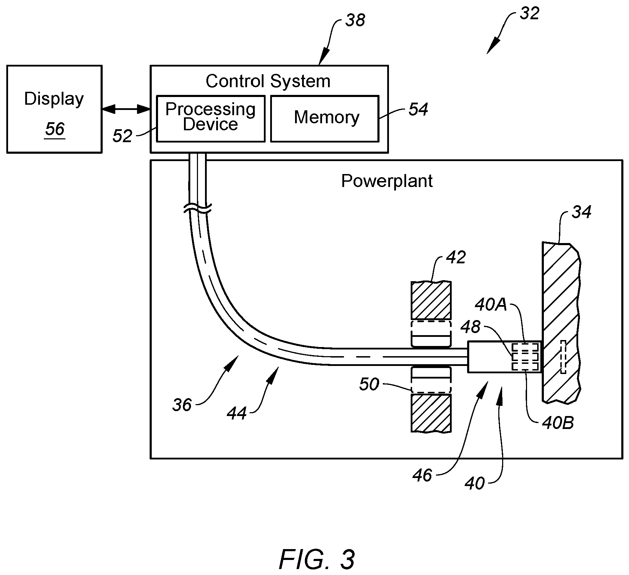

The present disclosure is directed to an inspection system that may be used to non-destructively inspect a component (e.g., see FIG. 3) of a powerplant for an aircraft 20. The aircraft may be an airplane, a helicopter, a drone (e.g., an unmanned aerial vehicle (UAV)) or any other manned or unmanned aerial vehicle. FIG. 1 illustrates an aircraft 20 in the form of an airplane having a pair of powerplants 22. The aircraft powerplant 22 may be configured as, or otherwise included as part of, a propulsion system for the aircraft 20. The aircraft powerplant 22, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. FIG. 2 diagrammatically illustrates a powerplant 22 in the form of a turbofan gas turbine engine having a fan section 24, a compressor section 26, a combustor section 28, and a turbine section 30. The aircraft powerplant 22 may alternatively be configured as, or otherwise included as part of, a power generation system for the aircraft 20. The aircraft powerplant 22, for example, may be an auxiliary power unit (APU) or any other type of gas turbine engine configured to mechanically power operation of an electrical generator. The present disclosure, however, is not limited to such exemplary aircraft powerplants. Aspects of the present disclosure, for example, may also be used for inspecting components of other types of internal combustion engines and/or components of various other types of power units; e.g., an electric machine, a hybrid-electric power unit, etc.

Referring to FIG. 3, an inspection system 32 is configured to facilitate inspection of a powerplant component 34 while that component 34 remains installed within the aircraft powerplant 22 and, for example, while the aircraft powerplant 22 remains substantially or completely assembled. FIG. 3 diagrammatically illustrates the inspection system 32 engaged with a powerplant component 34 (e.g., a rotor disk of a rotor stage) disposed internally within an aircraft powerplant 22. The inspection system 32 is also configured to facilitate inspection of the powerplant component 34 while the aircraft powerplant 22 remains onboard the aircraft 20; e.g., remains installed on wing, on fuselage, in airframe, etc. The inspection of the powerplant component 34 may be performed using the inspection system 32 while the aircraft 20 is outside of an aircraft hangar (e.g., on the tarmac at an airport between aircraft flights), and/or at a dedicated inspection and/or repair facility. The inspection of the powerplant component 34 may thereby be performed with a relatively short aircraft 20 downtime and/or a relatively minimal expense. The inspection system 32, of course, may also be used for inspecting the powerplant component 34 installed with the aircraft powerplant 22 when that aircraft powerplant 22 is not installed with the aircraft 20 (e.g., prior to installation with the aircraft 20 or following removal from the aircraft 20) and/or when the aircraft powerplant 22 is partially disassembled into one or more sub-assemblies.

The powerplant component 34 may be any inspectable metallic component 34 within the aircraft powerplant 22. The present disclosure provides considerable utility, for example, in the inspection of rotor disks (e.g., a turbine rotor, a compressor rotor, or the like) within a gas turbine engine. To facilitate the description herein, the present disclosure will be described in terms of inspecting a component 34 in the form of a gas turbine engine rotor disk. To be clear, the present disclosure inspection system 32 is not limited to inspecting rotor disks.

Aspects of the present disclosure include an inspection system 32 that includes an electronic inspection scope 36 and a control system 38. The present disclosure may utilize a variety of different inspection scope 36 configurations, and therefore is not limited to any particular inspection scope 36 embodiment. An example of an inspection scope 36 that may be used is provided herein for illustration purposes. The inspection scope 36 includes a transducer 40 that is configured to function as both a signal transmitter and a signal receiver. In some embodiments, the transducer 40 may include at least one signal transmitter 40A and at least one signal receiver 40B, independent of one another. In some embodiments, the transducer 40 may be configured as a single device that functions as both a transmitter and a receiver. To facilitate the description herein, the transducer 40 will be described as having a signal transmitter 40A independent of a signal receiver 40B, but the present disclosure is not limited thereto. The inspection scope 36 may include structure for securing a portion of the inspection scope 36 to a structural member 42 within the powerplant 22 and may include a mechanism for biasing the transducer in contact with a component 34 to be inspected.

FIG. 3 diagrammatically illustrates an example of an inspection scope 36 that includes a scope body 44, a scope head 46, a scope positional sensor 48, and a transducer 40. This example of an inspection scope 36 may also include structure for positionally fixing at least a part of the inspection scope 36; e.g., an expandable mount 50. In FIG. 3, the expandable mount 50 is diagrammatically shown in a stowed arrangement by a solid line and in a deployed arrangement by the dashed line. The expandable mount 50 is diagrammatically shown engaged with a component structure; e.g., engine casing, a panel, wall, or the like. The expandable mount 50 may also be configured to bias the scope head 46 against a surface of a component 34; e.g., a rotor disk.

The scope body 44 extends longitudinally and may be configured as a flexible body. The scope body 44 may include one or more internal actuators for manipulating the scope body 44 to aid in maneuvering the scope head 46 within the interior of the aircraft powerplant 22 to the component 34. The scope positional sensor 48 and the transducer 40 may be arranged with (e.g., mounted to and/or disposed in) the scope head 46. The scope positional sensor 48 (e.g., a camera, a proximity sensor, or the like) may be configured to aid in the maneuvering of the scope head 46 and, more particularly, maneuvering of the transducer 40 towards the component 34 to be inspected; e.g., a rotor disk. The transducer 40 includes a signal transmitter 40A and a signal receiver 40B.

The transducer signal transmitter 40A within the inspection scope 36 example shown in FIG. 3 may be configured to emit an excitation signal into the component 34 to be inspected; e.g., a rotor disk. A non-limiting example of a signal transmitter 40A that may be used is piezoelectric ultrasonic actuator that produces an ultrasonic excitation signal that may be transmitted into the component 34. The present disclosure is not limited to using a piezoelectric ultrasonic actuator, and in those embodiments that use a piezoelectric ultrasonic actuator, the present disclosure is not limited to any particular piezoelectric ultrasonic actuator configuration. An example of a piezoelectric ultrasonic actuator that may be used is a piezoelectric stack; sometimes referred to as a "PZT stack". Ultrasonic excitation signals may be in the range of 30-500kHz. In some embodiments, the excitation signals may be produced in particular frequency ranges; e.g., a five kilohertz (5 kHz) range, a ten kilohertz (10 kHz) range, a twenty kilohertz (20 kHz) range, or the like. The present disclosure is not limited to excitation signals in any particular frequency range. As will be detailed in further detail herein, the signal transmitter 40A is in communication with the control system 38 for controlling the operation of the signal transmitter 40A.

The transducer signal receiver 40B is configured to sense a signal within the component 34 (e.g., a rotor disk) that is produced in response to the emitted excitation signal and to produce a transducer response signal representative of the sensed signal. As will be detailed in further detail herein, the signal receiver 40B is in communication with the control system 38; e.g., response signals produced by the signal receiver 40B are provided to control system 38 for processing. The signal within the component 34 that is "produced" in response to the emitted excitation signal may assume a variety of different forms. In some instances, the produced signal may be the excitation signal after the excitation signal has traveled through the component. In these instances, the produced signal may be attenuated relative to the excitation signal, or it may be phase shifted to some degree, or the like. The present disclosure is not limited to any particular mechanism for "producing" the produced signal, other than the produced signal resulting from the emitted excitation signal.

The control system 38 includes a controller 52 (labeled as a processing device 52 in FIG. 3) that is in communication with other system components such as the signal transmitter 40A and the signal receiver 40B; e.g., to control the operation of the respective system component and/or to receive signals from and/or transmit signals to that system component to perform the functions described herein. The controller 52 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the inspection system 32 to accomplish the same algorithmically and/or coordination of system components. The controller 52 includes or is in communication with one or more memory devices 54. The present disclosure is not limited to any particular type of memory device, and the memory device 54 may store instructions and/or data in a non-transitory manner. Examples of memory devices 54 that may be used include read-only memory, random access memory, volatile memory, nonvolatile memory, static memory, dynamic memory, flash memory, cache memory, and/or any device that stores digital information. The controller 52 may include, or may be in communication with, an input device (not shown) that enables a user to enter data and/or instructions, and may include, or be in communication with, an output device 56 configured, for example to display information (e.g., a visual display as shown in FIG. 3, or a printer, or the like), or to transfer data, etc. Communications between the controller 52 and other system components may be via a hardwire connection or via a wireless connection.

The control system 38 may include other components (e.g., signal processing hardware such as amplifiers, filters, analog to digital converters, or the like) in addition to or as an alternative to the components described herein.

As indicated above, during the inspection of a component 34 the transducer signal transmitter 40A is controlled to emit excitation signals into the component 34 to be inspected; e.g., a rotor disk. The excitation signals may be at a single predetermined excitation signal frequency or at a plurality of excitation signal frequencies. The signal receiver 40B may be controlled to sense signals from the component 34 (resulting from the excitation signals) and produce transducer response signals representative of the sensed signals. In some embodiments, the signal receiver 40B may be controlled to sense signals within a predetermined range of frequencies and produce transducer response signals representative of the sensed signals. For example, the transducer 40 may be controlled to use a stepped sine sweep technique to sense within a predetermined range of frequencies; e.g., the excitation signals may be emitted into the component 34 in a sine wave format at particular predefined frequencies and the signal receiver 40B may be controlled to sense signals at those predetermined frequencies and produce transducer response signals representative of the sensed signals. The frequencies and the number of steps (i.e., the number of different frequencies) can be varied to suit the application at hand.

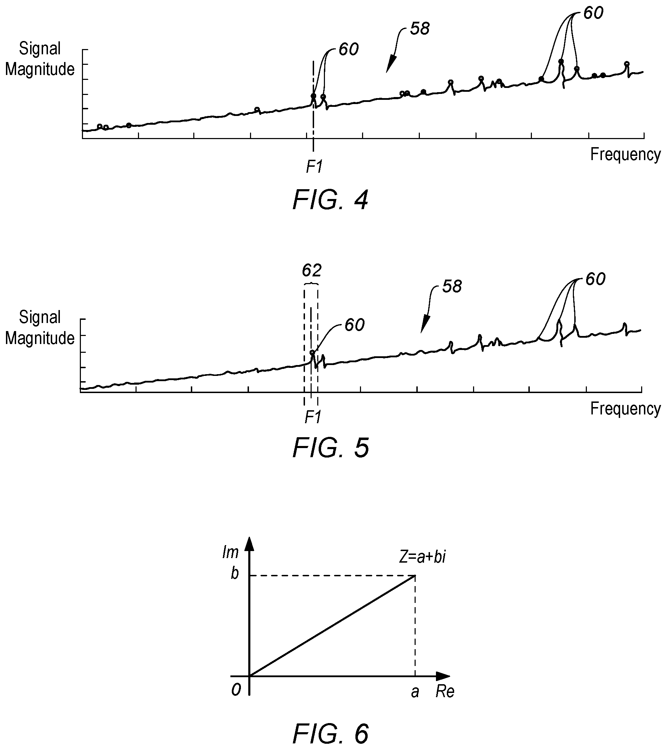

The transducer response signals may be initially processed (e.g., using stored instructions) to identify signal magnitude peaks. Signal magnitude peaks are, as the name implies, magnitude deviations within the transducer response signals. Signal peaks typically show as sharp or "spiked" deviations, but are not limited thereto. In some instances signal peaks may shown as "humps" that do not clearly have a spiked appearance. Referring to FIG. 4, a graph of transducer response signals 58 within a range of frequencies (i.e., a frequency band that may also be referred to as frequency response function) is plotted as a function of frequency versus signal magnitude. The graph is shown here to facilitate the explanation and the present disclosure does not require the transducer response signals 58 be subjected to a graphing function. To facilitate the description herein the signal peaks 60 within the frequency band are noted by dots in FIG. 4.

Referring to FIG. 5, the transducer response signals 58 may be further processed to select a signal peak 60 at a frequency of interest. The transducer response signals 58 within a narrow frequency band (i.e., a "sub band 62") around the selected signal peak 60 may be truncated and the transducer response signals 58 converted into complex numbers for representation in a complex plane. The present disclosure does not require the sub band to have any particular frequency range, and the frequency range of a sub band may vary; e.g., different sub range magnitudes for different signal peaks within the inspection frequency range, and/or different sub range magnitudes for different inspection parameters, and so on. In some embodiments, the magnitude of a sub band may be selected based on signal phase on opposite sides of the signal peak; e.g., the limits of the sub band may be selected to have the same or very similar signal phase at each limit of the sub band. Using a sub band that has similar / same signal phase at the limits of the sub band is understood to facilitate the complex plane analysis. In complex number form (*a + bi*), the transducer response signals 58 will include a real part ("a") and an imaginary part ("*bi*"). The complex numbers may be represented as vectors on a diagram referred to as an Argand diagram that represents the complex plane; e.g., see FIG. 6.

When a rotor disk is interrogated by transmitting excitation signals into the rotor disk and sensing the rotor disk for signals resulting from that transmission (as described herein), there is typically a high signal to noise ratio (SNR) and relatively little signal damping. As a result, the signal peaks 60 within the frequency response function may be "actual" signal peaks 60 associated with anomalies within the rotor disk or they may be "artificial" signal peaks 60 that are associated with signal noise; i.e., signal peaks 60 that result from SNR and are not representative of a physical characteristic within the rotor disk. In some instances, a SNR may obscure a signal peak 60 in the transducer response signals 58 causing it to appear more like a hump rather than a sharp, defined signal peak. It has been discovered that under these conditions (i.e., low damping, high SNR), the resultant transducer response signals 58 when represented in a complex plane can provide information that facilitates distinguishing an actual signal peak from signals (e.g., a false peak or a hump) attributable to noise.

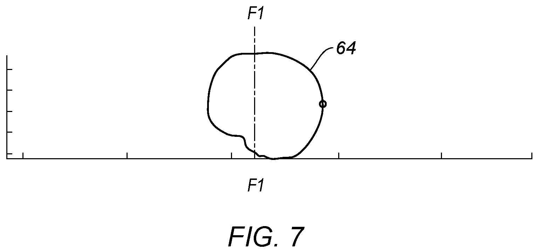

It has been discovered that converting the transducer response signals 58 within a narrow frequency band (i.e., sub band 62) around a selected signal peak 60 into complex numbers and representing those complex numbers in a complex plane provides information that can be used to distinguish an actual signal peak from an artificial peak or a hump that is associated with signal noise. For example, the complex numbers in the complex plane may take the form of a closed path; i.e., a "loop". FIG. 7 diagrammatically illustrates transducer response signals within a narrow frequency band around a selected signal peak (F1) converted into complex numbers and represented in a complex plane; e.g., the Y-axis may be representative of conductance (Siemens as a unit) and the Y-axis may be representative of susceptance (Siemens as a unit). In this instance, the complex numbers represented in a complex plane form a looped representation 64. The presence of a looped representation 64 is an indicator that a signal peak 60 is an actual signal peak rather than one associated with noise. Furthermore, it has been discovered that the geometric configuration of a looped representation 64 provides information that can be used to further distinguish an actual signal peak from an artificial peak. For example, it has been discovered that the probability that a signal peak 60 is an actual signal peak is related to the circularity of a looped representation within a complex plane; i.e., the greater the degree of circularity, the greater the probability that the signal peak 60 is an actual signal peak. As will be detailed below, the circularity may also provide information regarding the severity of the component material anomaly. The present disclosure, therefore, provides a desirable mechanism for distinguishing actual signal peaks 60 from noise. As shown in FIG. 4, a graph of transducer response signals within a range of frequencies may include a substantial number of features that appear to be signal peaks. The present disclosure may be used as a screening mechanism to evaluate those signal peaks 60 and eliminate peaks associated with noise and therefore not containing useful information.

In some embodiments, the present disclosure may employ an analytical algorithm (via stored instructions) to evaluate the circularity of a looped representation 64 within the complex plane. The algorithm may utilize threshold values (e.g., based on empirical data) when evaluating the circularity of a looped representation. For example, a value representative of the circularity (a "circularity value") of the looped representation 64 may be determined and that value may be compared to the threshold value. If the threshold condition is met, then the signal peak 60 may be considered as an actual signal peak. Conversely, if the threshold condition is not met, then the signal peak (or hump) may be dismissed as noise or as indicative of a material anomaly that does not rise to the level of an appreciable defect. In some embodiments, the threshold may be based on a degree of fit between the looped representation 64 and a modeled representation. In some embodiments, the threshold may be based on empirical data. An analytical algorithm approach as described herein may also be employed to provide "severity" information. For example, a determined circularity value may be evaluated to determine the severity of possible defect in the rotor disk material producing the signal peak. For example, the circularity value may be evaluated relative to a scale of circularity values (e.g., predetermined from empirical data and disposed within stored instructions). The severity of the possible defect can then be evaluated based on the scale.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A method of inspecting a component (34) for the presence or absence of a defect, comprising:
using a transducer (40) to interrogate a component (34) comprising a solid metallic material by transmitting first signals into the component (34) and sensing the component (34) for second signals resulting from the first signals being transmitted into the component (34), and producing component response signals (58) within a frequency band representative of the second signals;
selecting a signal peak of interest (60, F1) within from the component response signals (58), the signal peak of interest (60, F1) within a sub band (62) of the frequency band;
processing the component response signals (58) within the sub band (62), the processing including converting the component response signals (58) within the sub band (62) into complex numbers and producing a complex plane representation using the complex numbers; and
using the complex plane representation, identify the signal peak of interest (60, F1) as associated with a physical characteristic of the component (34) or associated with signal noise.

2. The method of claim 1, wherein the step of identifying the signal peak of interest (60, F1) as associated with the physical characteristic of the component (34) or associated with signal noise includes evaluating the complex plane representation.

3. The method of claim 2, wherein the evaluating the complex plane representation includes determining whether the complex plane representation is a looped configuration (64).

4. The method of claim 3, wherein the evaluating step further comprises determining a degree of circularity associated with a respective looped configuration (64).

5. The method of claim 4, wherein the step of identifying the signal peak of interest (60, F1) as associated with a respective physical characteristic of the component (34) or associated with signal noise is based on the degree of circularity of the respective looped configuration (64).

6. The method of claim 5, wherein the step of identifying the signal peak of interest (60, F1) as associated with a respective physical characteristic of the component (34) or associated with signal noise utilizes a degree of circularity threshold value.

7. The method of claim 6, wherein the threshold value is based on a degree of fit between the respective looped representation (64) and a modeled representation.

8. The method of claim 6, wherein the threshold value is based on empirical data.

9. The method of any of claims 4 to 8, further comprising determining a defect degree of severity value based on the degree of circularity associated with the respective looped configuration (64).

10. The method of claim 9, wherein the defect degree of severity value is based on empirical data.

11. An inspection system (32) for a component (34) within a gas turbine engine (22), the component (34)comprising a solid metallic material, the system (32) comprising:
a transducer (40) having a signal transmitter (40A) and a signal receiver (40B); and
a controller (52) in communication with the signal transmitter (40A), the signal receiver (40B), and a non-transitory memory (54) storing instructions, which instructions when executed cause the controller (52) to:
control the signal transmitter (40A) to transmit a first signal into the component (34) comprising the solid metallic material;
control the signal receiver (40B) to sense the component (34)for a second signal resulting from the first signal being transmitted into the component (34), and to produce response signals (58) within a frequency band representative of the second signals;
select a signal peak of interest (60, F1) within from the response signals (58), the signal peak of interest (60, F1) within a sub band (62) of the frequency band;
process the response signals (60, F1) within the sub band (62), the processing including converting the response signals (58) within the sub band (62) into complex numbers and producing a complex plane representation using the complex numbers; and
using the complex plane representation, identify the signal peak of interest (60, F1) as associated with a physical characteristic of the component (34) or associated with signal noise.

12. The inspection system of claim 11, wherein the instructions when executed cause the controller (52) to determine whether the complex plane representation is a looped configuration (64), and determine a degree of circularity of the complex plane representation if the complex plane representation is a looped configuration (64).

13. The inspection system of claim 12, wherein the step of identifying the signal peak of interest (60, F1) as associated with a respective physical characteristic of the component (34) or associated with signal noise is based on the degree of circularity of the respective looped configuration (64).

14. The inspection system of claim 13, wherein the step of identifying the signal peak of interest (60, F1) as associated with a respective physical characteristic of the component (34) or associated with signal noise utilizes a degree of circularity threshold value.

15. The inspection system of any of claims 12 to 14, wherein the instructions when executed cause the controller (52) to determine a defect degree of severity value based on the degree of circularity associated with the respective looped configuration (64).
